# EUROPEAN PATENT APPLICATION

(11) **EP 2 104 395 A1**
(43) Date of publication of application: **23.09.2009**
(21) Application number: 08250966.2
(22) Date of filing: 19.03.2008
(51) Int. Cl.: H04W 88/00

(54) **Mobile communication access point**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

Access Point Base Stations (femtocells) have means to provide wireless coverage to mobile terminals within radio range and a connection with an external communications network such as the internet, to provide connection with the infrastructure of a cellular telephone network.

In the invention, a number of such Access Point Base stations are linked to form a local area network and co-operate to provide cellular coverage, with handover provision between them, over a wider area than a single such cell could provide. Direct connection with the internet can be made through one or more of the Access Point base Stations, the others connecting to the internet using the local area network to reach one of those so connected The Access Point Base Stations co-operate with each other to provide wireless coverage throughout their combined range. Each Access Point Base Station also has means to identify itself to the external network through the external connection, by means of a main address common to all members of the LAN, and recognisable by the cellular network infrastructure, and also has a subaddress recognisable by other members of the LAN to determine routing between the group of femtocells..

## Description

This invention relates to mobile communications, and in particular to very-short-range wireless access points. Such access points, known as Access Point Base Stations or femtocells, give wireless coverage in a limited area. They are individual standalone access points that connect to a broadband access circuit on the network interface and provide GSM or "3G" (UMTS) connectivity to mobile devices within the local range of the access point. The use of such access points complements existing cellular network implementations and provides coverage in locations where cellular coverage transmission may be reduced, for example because of its inability to successfully penetrate through building structures. Unlike normal cellular base stations, (including so-called microcells and picocells) femtocells are not connected directly to the cellular switching system, and the neighbouring cells do not have any awareness of their presence.

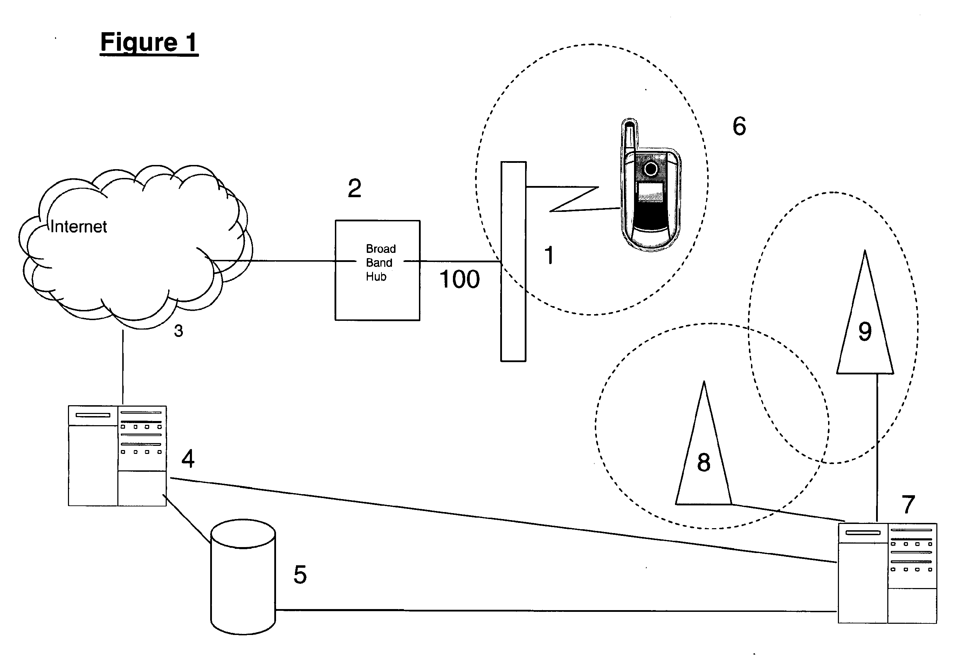

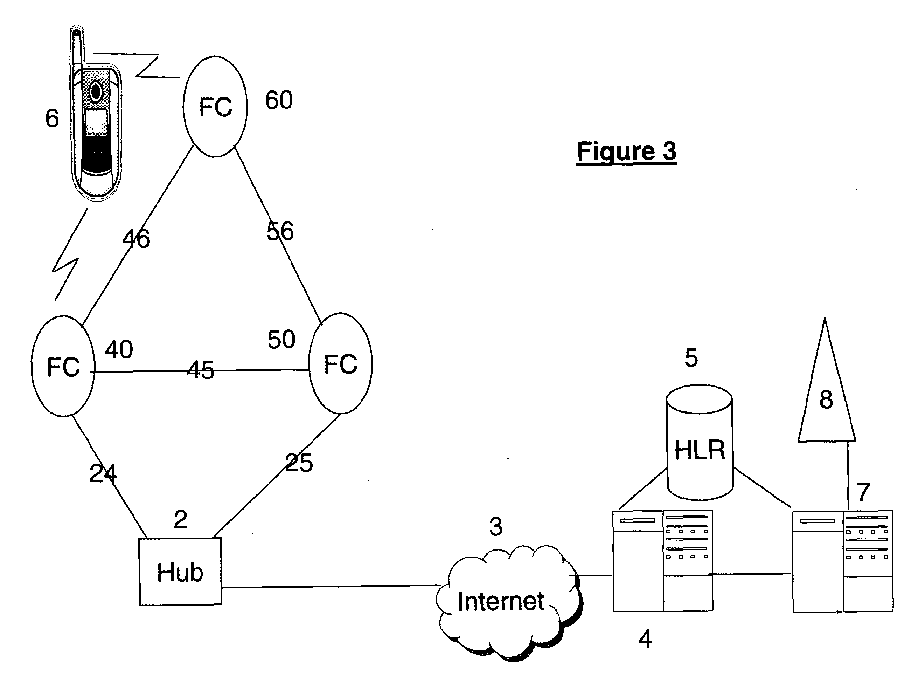

A typical example is illustrated in Figures 1 and 3. Figure 1 depicts a UMTS ("3G") cellular access point base station 1, connected through an Ethernet or broadband connection 100 and an internet access point 2 to the Internet 3 (or an intranet), and thus to a dedicated mobile switching centre 4 which reports handovers to the user's home location register 5 in the conventional manner when a mobile terminal 6 begins or terminates communication with the base station 1.

Access Point Base Stations do not form part of the cellular channel plan used by the overlay network 7, 8, 9, but operate in another part of the spectrum compatible with standard cellular handsets. As they are not part of the planned overlay network they do not operate a neighbour list for handover control - neither do they appear on the neighbour lists of any of the nearby public base stations 8, 9 in the area. Such neighbour lists are provided in the public network to assist the mobile unit to identify a base station to which to hand over when signal strength is deteriorating on the currently-serving baser station, to avoid loss of signal, particularly when a mobile unit is moving rapidly. The absence of a neighbour list is of less importance in the circumstances in which a femtocell is likely to be used, as its small range means that connection to it during rapid movement is neither possible nor desirable.

A handset coming into range of a base station 1 not on the neighbour list of its currently serving base station 9 can nevertheless hand over to it, so handover between a femtocell and the overlay network can still take place. This applies whether or not the coverage provided by the femtocell 1 overlaps that of the nearest base station 9 or not. The cellular network as a whole, and specifically the home location register 5, has no information relating to the geographical location of the femtocell 1, so the handset will appear to jump from part of the network served by one mobile switching centre 7 to another part served by a different mobile switching centre 4.

Note that this handover is an autonomous process - there is no interaction with the cellular network 7 to determine whether handover should take place. The handset access point 1 simply reports to the HLR 5 the fact of connection or loss of connection between the access point 1 and the handset 6. The network 7 will similarly report to the HLR 5 that connection with the handset 6 has been lost or established.

Application of VoIP (Voice over Internet Protocol allows such a unit 1 to be deployed as readily as a wi-fi (IEEE 802.11) access point, and provides the same capabilities as a normal cellular base station.

Femtocells can deliver many of the benefits of fixed-mobile convergence without the need for a dual-mode (e.g. GSM and WiFi) handset.

In the open air the coverage of such an access point may extend to about 500 metres around the device.

The typical range in the home or office is similar to that of a DECT cordless telephone system, but will suffer from degradation from the walls and other materials that are used in typical building construction. The bleed of coverage outside the home will be small, because of the way that the access points interact with the surrounding macro networks, combined with the blocking effect of building structures. For larger properties and business sites coverage may be incomplete.

At the present time femtocell devices are standalone mobile radio base stations that simulate the principal functions of a mobile operator's macro network. The femtocell acts as a single additional base station cell providing a radio network within buildings and offices. Femtocells are also limited in the number of concurrent calls they can support. It would be possible to provide two or more femtocells to provide wider coverage. However, these would compete with each other for bandwidth on the internet connection, and if they are operating independently they would not be able to arrange efficient handovers.

In a prior art system described in the applicant's copending application EP08250654.4 filed on February 26th 2008, and illustrated in Figure 2, there are provided first and second Access Point Base Stations (10, 11) each having interface means for communicating with the other, and both having means for wireless communication with cellular mobile terminals (6), one of the the Access Point Base Stations having an external connection (100) for communication with an external communications network (3), the first Access Point Base Station having a controller for configuring the second Access Point Base Station such that the Access Point Base Stations both communicate with the external communications network through the same said external connection, and that the Access Point Base Stations co-operate to provide wireless coverage to mobile terminals (6) within the combined range of the Access Point Base Stations. The second (repeater) device therefore replicates the mobile features of the first (master) femtocell device and is caused to operate as an extension of the first femtocell. This arrangement allows the coverage of the master femtocell to be extended in a relatively simple way. However, it is not practical to use this arrangement for more than one or two repeaters, because of possible interference between them and the difficulty of ensuring that mobile units are operating through the optimum wireless connection. The arrangement is also limited in the number of mobile units it can support, as the master cell cannot support more handsets than a conventional femtocell. The repeater simply copies the configuration of the main unit, and the radio patterns of the master and repeater are selected to complement each other, each using a portion of the spectrum initially allocated to the master station.

According to the present invention, there is provided a plurality of Access Point Base Stations having interface means for communicating with each other, and each having means for wireless communication with cellular mobile terminals, at least a first one of the Access Point Base Stations having an external connection for communication with an external communications network, and each Access Point Base Station having means to provide wireless coverage to mobile terminals, wherein the Access Point Base Stations have means to co-operate with each other to provide wireless coverage throughout their combined range, and each Access Point Base Station has means to identify itself to the external network. The invention extends also to an individual access point station of this type, and to a process for setting up the access point base stations to form a network.

This arrangement, unlike the prior art system described above, allows each of the Access Point Base Stations to act as a separate cell of the cellular system as seen by the network. However, as the stations co-operate with each other, handover is simplified as the overlay cellular network does not need to manage the handover process when a mobile unit transfers between the Access Point Base Stations. This is particularly useful as, without any data on the location of individual Access Point Base Stations, the network is unable to assist in managing handover either to or from an Access Point Base Station, and in particular between two such Access Point Base Stations. However, unlike the prior art system, the mobile unit sees a plurality of base stations and this allows handover to take place as normal from the perspective of the handset. As each base station handles its own call traffic, it also allows a greater volume of traffic than the prior art system in which the master station handles it all. The Access Point Base Stations are also arranged to co-operate with each other to establish a coverage plan to avoid interference between stations.

The Access Point Base Stations can be interconnected using a local area network or the like, allowing ready co-operation between them. Provided that at least one of the Access Point Base Stations has an external connection, any of the Access Point Base Stations without such a direct connection can nevertheless access the external network indirectly. It is advantageous for more than one of the Access Point Base Stations to have such external connectivity, as this provides a more robust connection to the external network and allows better load balancing.

In the preferred embodiment, each access point base station has its own network address, to allow independent routing of calls without the external network needing data on the architecture of the local network. However, it is desirable that the individual access point base stations have the facility to recognise each other's addresses: this facilitates handover and network planning. This can conveniently be arranged by providing each of the access points with the same main address but separate sub-addresses, and arranging that access points recognise other access points having the same main address as part of the same local network.
The individual bas stations maintain information on each other and adjust their radio patterns accordingly, and may negotiate with multiple access points for a handset roving between them. This is a more complex system than the aforementioned repeater system, but allows greater flexibility. In particular, spectrum re-use is possible as the individual access points configure themselves according to the local wireless environment, rather than being allocated spectrum from a master unit.

By allowing connectivity between femtocell devices, and allowing call handoff between devices, as well as the ability to rove into and out of the most appropriate access point, a number of individual femtocells are thus interconnected such that they provide a networking solution that can give improved coverage in terms of range, as well as improved performance in terms of the number of concurrent calls and data throughput. The end user will see an improved coverage pattern within complex building situations, and will also see seamless handover and roving between locations in a building served by different elements of the sub-network.

As they join the network, each individual femtocell device may self-configure its radio output pattern, such that it does not interfere with either the neighbouring femtocells in the subnetwork or with any adjacent macronetwork. The result will be a network of shared femtocell devices that can provide much improved coverage within offices and other buildings that have complicated layouts, or a distributed number of sites and access points.

An embodiment will be described with reference to the Figures, in which:
Figure 1 is a schematic illustration of a prior art Access Point Base Station installed to provide cellular capability away from the range of the overlay network, and has already been discussed;
Figure 2 is a schematic illustration of a master and repeater Access Point Base Station combination in accordance with the prior art system of EP08250654.4 already discussed;
Figure 3 is a schematic illustration of an access system according to the invention
Figure 4 is a schematic illustration of one of the Access Point Base Stations of Figure 3 in more detail
Figure 5 depicts the process performed by a device in order to join the network of access point base stations.
Figure 6 depicts the process performed by a device already forming part of such a network of access point base stations in order to allow a further device to join the network
Figure 7 depicts the handover process by which connection of a user device is transferred from one access point base station to another.

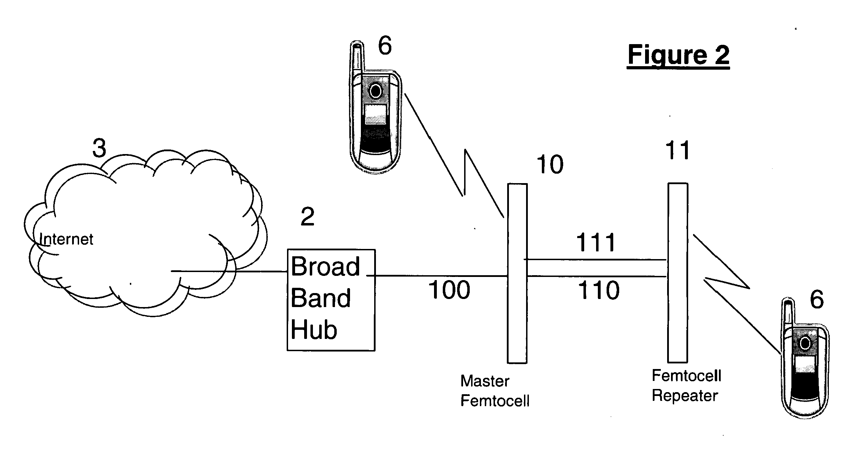

In the prior art system of EP08250654.4 shown in Figure 2, an interface device 11 has a connection 110, 111 to a master femtocell 10 device, which in turn has a direct connection 100 to the Internet 3 by means of a broadband access circuit 2. Either femtocell 10, 11 may operate as the master cell, but it is advantageous for the master unit to be the one connected directly to the hub 2 as this allows that unit to continue to operate in the event of removal or failure of the other cell 11 or the interconnecting link 110.

The inbuilt radio configuration services of the repeater femtocell 11 allow it to configure its co-existence with the main femtocell unit 10, to ensure the optimum coverage is provided for the user, without interference between the two units. As the repeater 11 uses the functions of the master unit 10, and shares its channel allocation, it does not expand the available capacity, merely allowing that capacity to be available over a wider area. This arrangement therefore provides a simple extension of the area of coverage of the master cell 10.

For a more complex system, or when greater capacity is needed, an embodiment according to the present invention can be used

Figure 3 depicts a simple network of three access points 40, 50, 60, interconnected with each other and a hub 2 to form a local area network 24, 25, 45, 46, 56. The connections forming the LAN may be by direct cable connection (e.g. USB or Ethernet), a wireless connection (e.g. "Bluetooth" or "Wifi") or any other suitable means, or any combination of such means. Some of the access points (e.g 60) have only indirect connections (46, 24 or 56, 25) to the hub 2, made through other access points (40, 40) which have direct connections to the hub. An access point 40 with a direct connection 24 to the hub 2 would, in general, use that direct connection, but may also connect indirectly through a connection 45 with another access point 50 if, for example the direct connection is of low capacity or is experiencing heavy use.

Thus a local mesh of femtocells may be built up, each of which may have its own broadband link associated with it.

The femtocells 40, 50, 60 are configured to allow handover between them so that as a user 6 transits between them he can be connected to the femtocell providing the strongest signal. However, handover procedures between the cells can be adapted to take into account available capacity - either on the wireless spectrum or in the LAN.

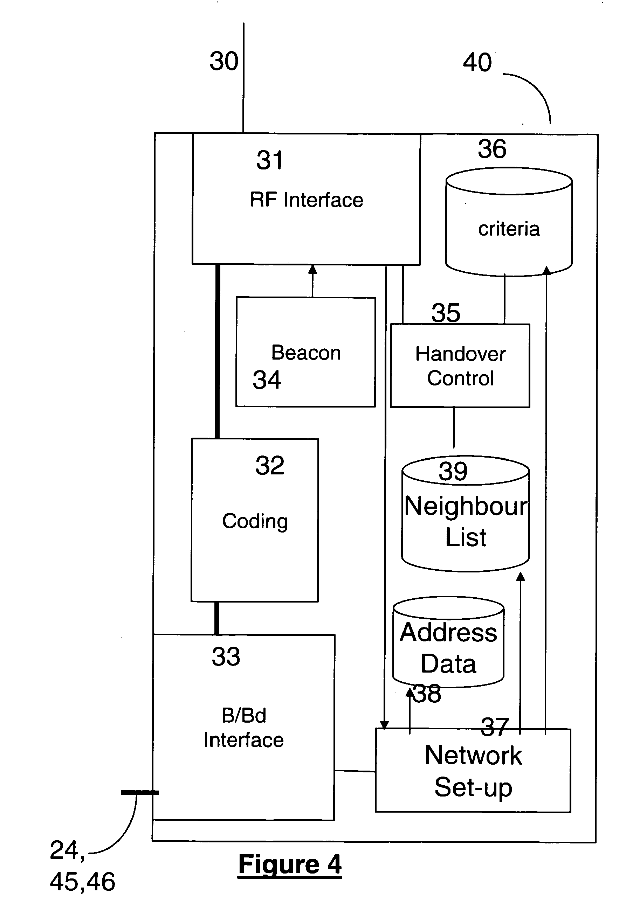

Figure 4 depicts one of the access points 40. This unit has all the elements 30-36 of a conventional femtocell access point. Specifically, the unit therefore has an antenna 30 for communication with one or more mobile terminals 6. The signals received by the antenna are demodulated from the RF carrier by an RF transmitter/receiver 31, the coding converted to a form suitable for carrying over the broadband connection 100 by a codec 32 and then transmitted by an ethernet interface 33 or the like onto the broadband connection 100. Similarly, signals received by the ethernet interface 33 are converted by the codec 32 to a form suitable for modulation onto an RF carrier by the RF interface 31 and transmitted by the antenna 30. The access point 40 also includes a beacon function 34 to transmit an RF signal advertising its availability over the RF transmitter 31, and a handover control function 35 for handling the interactions with mobile handsets to allow them to establish and relinquish connection with the access point 40, according to criteria relating to signal quality or the like maintained in a data store 36.

In addition to these conventional components, the access point also operates a network set-up function 37. On connection to the LAN 24, 45, 46, this interrogates its neighbours both through the LAN to establish a network address 38, and also through the wireless environment to establish a neighbour list 39. The neighbour list 39 stores details of the other access points 50, 60 connected to the local area network. Such details include the frequencies and cellular beacon codes, etc, to allow a user terminal to identify the neighbouring terminals with which it may effect a handover. It also includes the network addresses of such terminals.

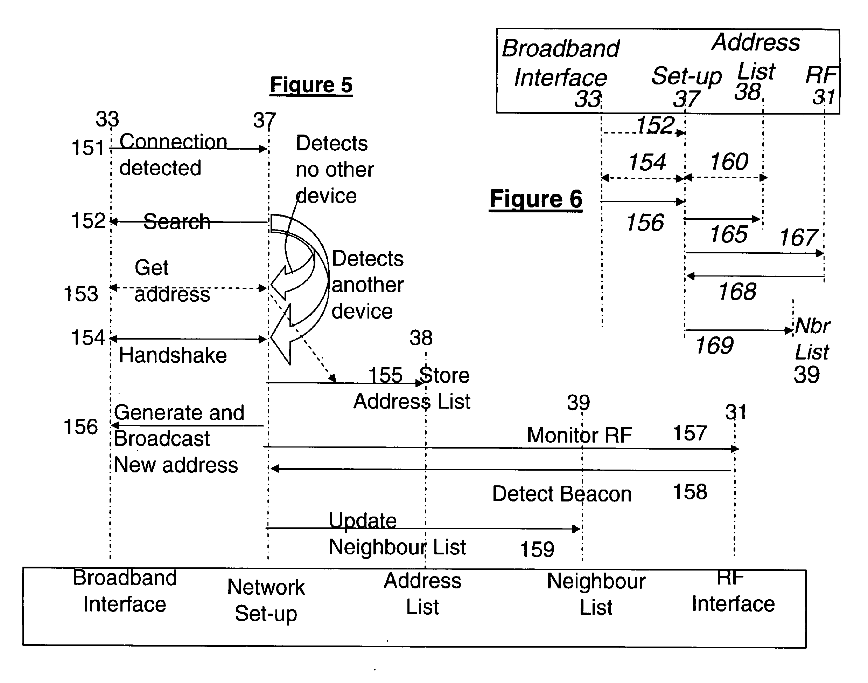

The setting-up process is shown in Figures 5 and 6. Figure 5 depicts the processes performed by a device being added to the network, with alternative outcomes according to whether the device is the first to join the network (153, 155) or is joining an existing network (154-159).

Figure 6 depicts the processes being performed by the existing members of the network. Note that the steps shown in dashed lines (152, 154, 160) are performed by only one of the already-connected devices, but the other steps (156, 165) are performed by all the already-connected devices. The set-up function 37 is initiated when a device 40 is first connected to a local area network, and also when it detects any further device having been connected (step 151).

When a device 40 is first connected to a LAN it searches for other such devices connected to the same LAN (step 152). If it does not detect any other such device, it connects through the hub 2 to the internet and requests a network address from the server 4 (step 153). The address is supplied with an associated allocation of sub-addresses which the device 40 maintains in an address list store 38 for allocation to subsequently-added members of the same LAN.. So, if the basic network address is aaaa,bbbb,cccc,dddd the individual sub-network elements would be aaaa,bbbb,cccc,dddd,0001, aaaa,bbbb,cccc,dddd,0002, each node taking a different address in the fifth block.

Until it detects a further device connecting to the same LAN, the device 40 operates as a standard femtocell. In this condition the criteria 36 for handover are the default conditions of a singleton device in which handover depends only on comparison with any base stations 8 in the overlay network. These remain unaware of the femtocell as a potential source of handover. A mobile unit may nevertheless switch between the femtocell and the overlay network, but this will not be a "graceful" handover as it is not part of the neighbour list and therefore the transition cannot be managed in the normal way.

If, on conducting the search 152, a device 50 detects the presence of one (or more) devices 40 already so connected, a handshake function 154 is performed with one of them (40). This handshake 154 causes the network set-up function of the already-connected device (40) to retrieve its address list 38 (step 160, see Figure 6) and deliver it to the newly-connected device 50, which stores the addresses (step 155) thus also giving the newly-connected device the details of any other devices (e.g. 60) that are also already connected. Note that the already-connected device (40) that performs this step will in general be a close neighbour in the LAN - it need not be the device that first connected to the LAN.

Using the address details 38, one of the family of sub-addresses is allocated for use by the newly-connected device (50). It may be generated by the newly-connected device 50 itself as shown, or by one of the already-connected devices 40. Thus the combined network of interconnected femtocell devices will share a single network identification, this being the address and cell identification of the first device 40 connected to the broadband connection.

A message is now broadcast to all the other members of the LAN (step 156), with the details of the revised address list. This address list includes the network address 39 and beacon code 34 of each member of the LAN, including the new member. The other members of the LAN 40, 60 update their own address lists 38 (step 165, Figure 6) so that they can recognise the sub-address as now relating to a member of the LAN. This allows all the devices to maintain a record of which sub-addresses are in use, so that any such device receiving a handshake from a further new member can allocate an unused sub-address to it.

In the illustrated embodiment the newly-connected device selects an address from the master list delivered from the already-connected device 40 with which it first makes contact. However, that already-connected device 40, or some designated device such as the first-connected device, may select the address to be used by the newly-connected device. In each case, the updated address list is broadcast to all the other units.

The device has now been connected to the LAN. It remains to incorporate it into the local wireless environment.

In the illustrated embodiment the beacon identities of all the other members of the LAN, received as part of the address information 154, 155 from the already-connected device 40, are added to the neighbour list 39 of the newly-connected device, and conversely the beacon identity of the new member 50 is added to all the other members' neighbour lists as part of the update process. The new addition and any neighbouring devices can then modify their frequency plans to accommodate each other.

In a preferred arrangement each existing device (40, 60) monitors its respective RF interface 31 (step 167) to determine whether it can detect the beacon 34 of the newly-connected device (50), and if it detects it (step 168) it adds it to its neighbour list 37 (step 169) and modifies the handover criteria 36 to accommodate it. The newly-connected device similarly searches for the beacons 34 of each existing device (40, 60) advised to it (step 157), and on detecting such beacons (step 158) compiles a neighbour list 39 of its own (step 159), and generates appropriate handover criteria 36. This is more efficient of wireless capability, as members of the network whose coverage areas do not overlap may re-use the same frequencies without interference.

The use of subaddresses allows the network VLR 4 to recognise calls to any of the access points 40, 50, 60 to the same hub 2, as all the subaddresses are associated with the same main address which is associated in the VLR 4 with the hub 2. Routing to individual subaddresses is handled by the hub, which controls the LAN.

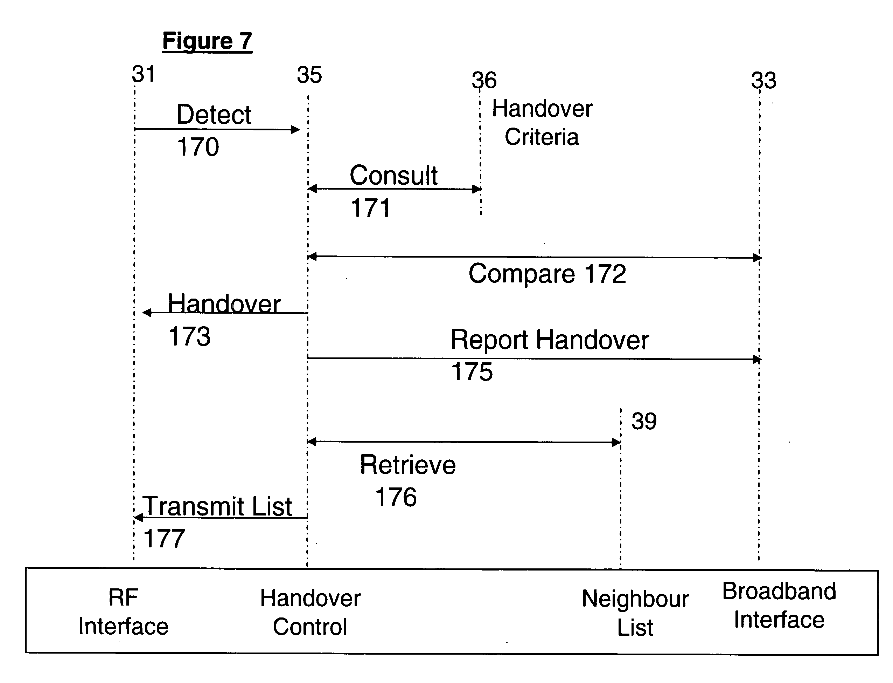

Once each unit 40, 50, 60 has been initially configured, or re-configured following the addition of a new unit to the LAN, it operates as will now be described with reference to Figure 7.

The handover control unit 35 generally operates as in a conventional femtocell access point 1. If the handover control system 35 detects a mobile unit 6 as it comes into range of the RF interface 31 (step 170), and co-operates with the mobile unit 6 and, provided the handover criteria (36) are complied with (step 171) it connects to the mobile unit 6 over the RF Interface 31 (step 173), and reports such handovers to the cellular network by way of the broadband interface 33, 2, 3, 4 (step 174).

Because the sub-network elements can identify each other, the handover of a user device 6 between sub-network elements 40, 50 can use co-operation between the subnetwork elements to monitor the received signal quality of the user device at each element, so that each element can identify any user device for which an improving signal strength is detected. This will also inhibit handovers into the overlay network, as any overlay network base station 8 within range will not form part of the neighbour list. It is desirable to inhibit such handovers as they require more complex signalling as control is handed between two switching centres 4, 7.

Therefore, when a femtocell device 40 reports improved quality for a predefined number of tracking cycles (step 170), the connected and receiving femtocell devices 40, 50 co-operate through the fixed connection 33 (step 172) to issue a command to the handset 6 (step 173) such that it makes contact with the receiving femtocell device 50 and disconnects from its original connected femtocell device 40.

Once a handover has taken place and has been reported to the network 4, the handover control system 35 retrieves a copy of the neighbour list 39 (step 176) and transmits it to the handset 6 (step 177). This allows the mobile unit 6 to be made aware of the beacon codes of its neighbours 40, 50, 60, allowing it to better identify potential candidates for a subsequent handover.

Incoming calls are more effectively routed as the network addresses of the members of the group 40, 50, 60 are related. The user terminal 6 appears to the network as being present within the range of the combined sub-network. The VLR 4, having a record of the required mobile unit being attached to a base station 60 having a given network address will start its scan by addressing that base station. If the mobile unit 6 is no longer attached to that station, the search will be addressed to those having the same address root, which will be the subaddresses of the other ferntocells 40, 50 attached to the LAN of the address. If the mobile unit has simply moved within the range of the extended network, one of these subaddresses will be the one of the currently-serving femtocell.

Although in general the network (HLR 5) is only capable of identifying that a given mobile unit 6 is attached to a LAN 40, 50, 60, it would be possible by management interaction to identify the exact location down to an individual femtocell 40 element. It may be possible to provide even better location data by taking measurements from adjacent femtocell devices in the sub-network to provide a form of triangulation. However, because of multipath effects and non-line-of-sight radio paths in short-range applications such measurements are not particularly reliable.

## Claims

1. An access point station having interface means for communicating with one or more similar access point base stations, and with an external communications network, and the Access Point Base Station having means to provide wireless coverage to mobile terminals, wherein the Access Point Base Station has means to co-operate with the similar base stations to provide wireless coverage throughout the combined range, and means to identify itself to the external network.

2. An Access Point Base Station according to claim 1, having means to co-operate with neighbouring Access Point Base Stations to configure their radio output patterns to establish a wireless coverage plan that avoids interference between stations.

3. An access point base station according to claim 1 or claim 2, comprising address means for storing a network address allocated to the access point base station, and means for recognising addresses allocated to the co-operating base stations as part of a local network.

4. An access point base station according to claim 3, wherein the network addresses allocated to the access point base station and the co-operating stations share a main address but have separate sub-addresses, and arranging that access points recognise other access points having the same main address as part of the same local network.

5. An access point base station according to claim 4, having means for generating a sub-address for a co-operating access point base station when it first connects to the system.

6. A network of Access Point Base Stations each having interface means for communication with each other, at least a first of the Access Point Base Stations having an external connection for communication with an external communications network, and each Access Point Base Station having means to provide wireless coverage to mobile terminals, wherein the Access Point Base Stations have means to co-operate with each other to provide wireless coverage throughout their combined range, and each Access Point Base Station has means to identify itself to the external network.

7. A network of Access Point Base Stations according to claim 6, having means to co-operate with neighbouring Access Point Base Stations to configure their radio output patterns to establish a wireless coverage plan that avoids interference between stations.

8. A network of access point base stations according to claim 6 or claim 7, wherein the stations each comprise address means for storing a network address allocated to the access point base station, and means for recognising the addresses of the other memebrs of the network.

9. A network of access point base stations according to claim 8, wherein the network addresses allocated to each access point base station share a main address but have separate sub-addresses.

10. A network of access point base stations according to claim 9, wherein one or more of the access point base stations have means for generating a new sub-address for access point base stations connecting to the system.

11. A process for setting up a plurality of access point base stations to form a network, comprising the steps of connecting a first access point base station to an external network, generating a network address for the first access point base station, connecting at least a second access point base station to the first access point base station to form a local network, and causing the access point base stations to co-operate together to provide wireless coverage throughout their combined range, each Access Point Base Station having means to identify itself to the external network such that calls can be routed to and from the individual access point base stations.

12. A process according to claim 11, wherein the Access Point Base Stations co-operatively configure their radio output patterns to establish a wireless coverage plan that avoids interference between stations.

13. A process according to claim 11 or claim 12, wherein the stations are each allocated a respective network address, the network addresses being separate sub-addresses of a shared main address.

14. A process according to claim 13, wherein the main address is generated on connection of the first access point base station to an external network and, on connection of a second or subsequent base station, the already-connected base station, or one of them, generates a new sub-address for the newly-connected access point base station.

15. A process according to claim 14, wherein each access point base station maintains a record of the available subaddresses already in use and of the available subaddresses not currently in use, and when a second or subsequent base station is first connected to the network one of the already-connected base stations selects a subaddress for the newly-connected base station from those not currently in use, and causes the records of the newly-connected base station and of all the already-connected base stations to be updated with the revised subaddress details.
